# EUROPÄISCHE PATENTSCHRIFT

(11) **EP 0 536 643 B1**
(45) Veröffentlichungstag und Bekanntmachung des Hinweises auf die Patenterteilung: **27.12.1996**
(21) Anmeldenummer: 92116828.2
(22) Anmeldetag: 01.10.1992
(51) Int. Cl.: H04M 1/04, B60R 11/02

(54) **Aufnahmevorrichtung für ein schnurloses Telefon**
Holder device for a cordless telephone
Dispositif de support pour un téléphone sans fil

(30) Priorität: 08.10.1991 DE 4133326
(43) Veröffentlichungstag der Anmeldung: 14.04.1993
(73) Patentinhaber: SIEMENS AKTIENGESELLSCHAFT, 80333 München (DE)
(72) Erfinder: Grassl, Erwin, W-8193 St. Heinrich (DE); Münscher, Wolfgang, W-8000 München 60 (DE)

(56) Entgegenhaltungen:
- EP-A- 0 269 096
- GB-A- 738 714
- US-A- 5 033 709
- PATENT ABSTRACTS OF JAPAN vol. 10, no. 175 (E-413)(2231) 20. Juni 1986 & JP-A-61 26 352

## Beschreibung

Die Erfindung betrifft eine Aufnahmevorrichtung für ein schnurloses Telefon. Eine gattungsgemäße Vorrichtung zur Aufnahme eines Schnurlosen Tefefons ist z.B. aus EP-A-0 269 096 bekannt.

Bei Aufnahmevorrichtungen für schnurlose Telefone besteht der Wunsch, diese wahlweise als Tisch- oder Wandgerät einzusetzen. Es ist daher die Aufgabe der vorliegenden Erfindung, eine Aufnahmevorrichtung anzugeben, die sowohl als Tisch- als auch als Wandgerät eingesetzt werden kann.

Diese Aufgabe wird erfindungsgemäß durch eine Aufnahmevorrichtung für ein schnurloses Telefon gelöst, welche durch einen mit einer Aufnahmemulde versehenen, annähernd quaderförmigen Aufnahmekörper mit einer quer abgewinkelten Bodenplatte, bei welchem die Seitenwände jeweils im vorderen und hinteren Abschnitt Verbindungselemente für Halterungen aufweisen, gekennzeichnet ist, und welche weiterhin gekennzeichnet ist, durch zwei streifenförmige Halterungen, die derart gestaltet sind, daß sie in Verbindung mit dem Aufnahmekörper auf ihrer einen Seite mit der Seitenwand abschließen und auf ihrer anderen Seite über die Seitenwand herausragen und mit dem Aufnahmekörper jeweils nur an diagonal gegenüberliegenden Stellen in jeweils umgekehrter Ausrichtung verbindbar sind.

Je nach ihrer Anordnung gestatten die beiden Halterungen eine Benutzung der erfindungsgemäßen Aufnahmevorrichtung als Tisch- oder als Wandgerät. Bei der Verwendung der Aufnahmevorrichtung als Tischgerät dienen die beiden Halterungen zur Abstützung der Aufnahmevorrichtung in einer durch die abgewinkelte Bodenplatte vorgegebenen Schräglage. Diese Schräglage gestattet eine vorteilhafte Bedienung des schnurlosen Telefons während des Wahlvorgangs.

Bei der Verwendung der erfindungsgemäßen Aufnahmevorrichtung als Wandgerät dienen die Halterungen als Haltevorrichtung für das schnurlose Telefon und verhindern, daß dieses nach unten herausrutschen kann.

Sowohl für den Tisch- als auch für den Wandbetrieb werden die gleichen Teile benötigt. Es müssen also während einer Betriebsart keine zusätzlichen Teile für die andere Betriebsart bereitgehalten werden.

Dadurch, daß die Halterungen nur in bestimmten Lagen an bestimmten Stellen montierbar sind, ist auch bei einer Montage durch Laien immer der richtige Gebrauch der Halterungen gewährleistet.

Eine zweckmäßige Weiterbildung der erfindungsgemäßen Aufnahmevorrichtung besteht aus einem quaderförmigen Aufnahmekörper und zwei Halterungen,
- wobei der quaderförmige Aufnahmekörper folgendermaßen ausgebildet ist:
   -- im oberen Teil ist eine sich in Längsrichtung erstreckende und an einer Schmalseite offene Aufnahmemulde angeordnet,
   -- die Bodenplatte ist im Bereich des geschlossenen Endes der Aufnahmemulde schräg nach oben hin abgewinkelt,
   -- die Seitenwände weisen im Bereich des offenen Endes der Aufnahmemulde in ihren unteren Abschnitten und im Bereich des geschlossenen Endes der Aufnahmemulde in ihren oberen Abschnitten jeweils mehrere nebeneinanderliegende, nach unten bzw. oben offene Hinterschneidungen auf,
   -- gegenüber den Hinterschneidungen sind in den Seitenwänden nach oben bzw. unten offene nebeneinanderliegende kreisförmige Vertiefungen angeordnet,
- und wobei die Halterungen folgendermaßen streifenförmig ausgebildet sind:
   -- an einem Ende sind sie von einem rechtwinklig zur Längsachse verlaufenden ersten Steg und am anderen Ende von einem schräg zur Längsachse verlaufenden zweiten Steg begrenzt, -- die beiden Stege weisen zur selben Seite der Halterungen,
   -- auf der Innenseite des ersten Steges sind nebeneinanderliegende Pocken angeordnet,
   -- von der Innenseite des zweiten Steges erstrecken sich nebeneinanderliegende, parallel zur Längsachse verlaufende Rippen,
      --- deren Enden so ausgestaltet sind, daß sie formschlüssig mit den Hinterschneidungen in den Seitenwänden des Aufnahmekörpers ineinandergreifen. Bei dieser Ausführungsform sind die beiden Halterungen leicht

mit dem Aufnahmekörper zu verbinden, wobei sie derart mit dem Aufnahmekörper verbunden sind, daß durch die formschlüssigen Verbindungselemente ein Abspringen der Halterungen während des Gebrauchs verhindert wird. Anhand eines in der Zeichnung dargestellten beispielhaften

Ausführungsbeispiels einer Aufnahmevorrichtung gemäß der vorliegenden Erfindung soll diese nachfolgend näher erläutert werden.

Es zeigen
- FIG 1: eine perspektivische Darstellung einer Aufnahmevorrichtung gemäß der vorliegenden Erfindung als Wandgerät,
- FIG 2: eine perspektivische Darstellung einer Aufnahmevorrichtung gemäß der vorliegenden Erfindung als Tischgerät,
- FIG 3: eine Ansicht mit Teilschnitten der Aufnahmevorrichtung gemäß FIG 1, und
- FIG 4: eine Draufsicht auf die Innenseite einer Halterung der in den FIG 1 und 2 dargestellten Aufnahmevorrichtung.

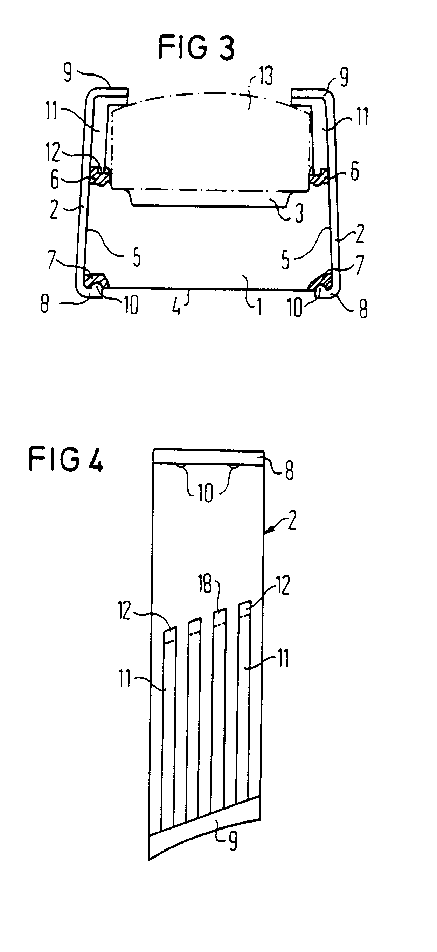

Die erfindungsgemäße Aufnahmevorrichtung besteht im wesentlichen aus dem Aufnahmekörper 1 und den beiden Halterungen 2. Im oberen Teil des Aufnahmekörpers 1 befindet sich eine Aufnahmemulde 3 für das schnurlose Telefon 13. Um die erfindungswesentlichen Details deutlich herauszuheben, wurde auf eine Darstellung des schnurlosen Telefons verzichtet. Seine Lage ist lediglich in FIG 3 angedeutet.

Es soll zunächst anhand von FIG 2 die Benutzung der Aufnahmevorrichtung als Tischgerät beschrieben werden. Bei der Benutzung als Tischgerät liegt der Aufnahmekörper 1 mit dem vorderen Teil seiner abgewinkelten Bodenplatte 4 auf der Tischoberfläche auf. Die dadurch erreichte instabile Schräglage wird durch die Halterungen 2 stabilisiert, die den hinteren Teil des Aufnahmekörpers abstützen, wobei der zweite Steg 9 der Halterung 2 auf der Tischoberfläche aufliegt. Diese Schräglage gestattet eine vorteilhafte Wahl bei einem sich noch in der Aufnahmemulde 3 befindlichen schnurlosen Telefon 13.

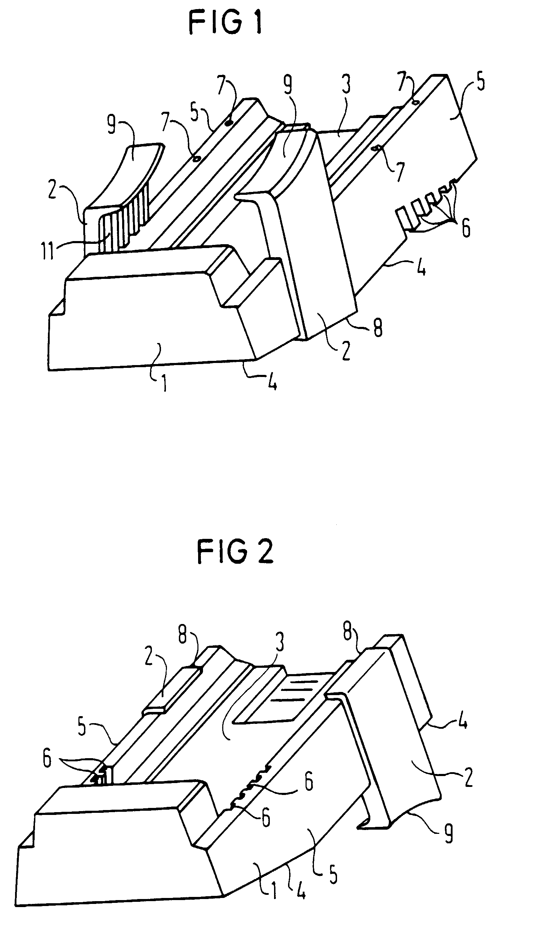

Bei der Benutzung der erfindungsgemäßen Aufnahmevorrichtung als Wandgerät, wie sie in FIG 1 dargestellt ist, ist das Gerät mit dem hinteren Teil der abgewinkelten Bodenplatte 4 fest auf einer Wand montiert. Die beiden Halterungen befinden sich nun am vorderen Teil des Aufnahmekörpers 1 und sorgen für einen sicheren Halt eines eingeschobenen schnurlosen Telefons, so daß verhindert wird, daß dieses nach vorne herausrutscht.

Die beiden Halterungen 2 bestehen aus einem durch einen ersten Steg 8 und einem zweiten Steg 9 begrenzten Streifen, wobei der erste Steg 8 senkrecht zur Längsachse der Halterung 2 und der zweite Steg 9 schräg zur Längsachse verläuft. Dabei entspricht der Winkel, den der zweite Steg 9 mit der Längsachse der Halterung 2 bildet, dem Winkel, um welchen die Bodenplatte 4 abgewinkelt ist. An der Innenseite des ersten Steges 8 befinden sich Pocken 10, die im verbundenen Zustand der Halterung 2 mit dem Aufnahmekörper 1 in die kreisförmigen Vertiefungen 7, die sich in den Seitenwänden 5 befinden, einrasten. Die formschlüssige Verbindung der Halterung 2 mit dem Aufnahmekörper 1 erfolgt durch das Eingreifen der Rippenenden 12 in die Hinterschneidungen 6 in den Seitenwänden 5. Diese Verbindungen sorgen für einen sicheren Halt der Halterungen 2 während der Benutzung und verhindern ein unbeabsichtigtes Abspringen der Halterungen.

Ein großer Vorteil der erfindungsgemäßen Aufnahmevorrichtung ist, daß für die Benutzung der Aufnahmevorrichtung als Tisch- oder als Wandgerät die gleichen Teile Verwendung finden. Es müssen lediglich zwei bereits mit dem Aufnahmekörper 1 verbundene Halterungen 2 umgesteckt werden. Es müssen also während der Benutzung als Tischgerät keine zusätzlichen Teile in Verwahrung gehalten werden, die bei der Benutzung der Aufnahmevorrichtung als Wandgerät benötigt werden.

Durch die Form der Halterungen 2, die zueinander spiegelbildlich sind, und der Verbindungselemente in den Seitenwänden 5 ist gewährleistet, daß jede Halterung 2 nur an bestimmten diagonal gegenüberliegenden Stellen des Aufnahmekörpers 1 eingesetzt werden kann. Dadurch, daß die Halterungen 2 an jeder dieser beiden Stellen nur in einer bestimmten Ausrichtung eingesetzt werden können, ergibt sich automatisch die richtige Anordnung der Halterungen für den entsprechenden Betrieb als Tisch- oder Wandgerät.

## Patentansprüche

1. Aufnahmevorrichtung für ein schnurloses Telefon,
**gekennzeichnet** durch
einen mit einer Aufnahmemulde (3) versehenen, annähernd quaderförmigen Aufnahmekörper (1) mit einer quer abgewinkelten Bodenplatte (4), bei welchem die Seitenwände (5) jeweils im vorderen und hinteren Abschnitt Verbindungselemente (6, 7, 10, 11, 12) für Halterungen (2) aufweisen, weiterhin gekennzeichnet durch zwei streifenförmige Halterungen (2), die derart gestaltet sind, daß sie in Verbindung mit dem Aufnahmekörper (1) auf ihrer einen Seite mit der Seitenwand (5) abschließen und auf ihrer anderen Seite über die Seitenwand (5) herausragen und mit dem Aufnahmekörper (1) jeweils nur an diagonal gegenüberliegenden Stellen in jeweils umgekehrter Ausrichtung verbindbar sind.

2. Aufnahmevorrichtung nach Anspruch 1,
bestehend aus einem quaderförmigen Aufnahmekörper (1) und zwei Halterungen (2),
- wobei der quaderförmige Aufnahmekörper (1) folgendermaßen ausgebildet ist:
-- im oberen Teil ist eine sich in Längsrichtung erstreckende und an einer schmalen Seite offene Aufnahmemulde (3) angeordnet,
-- die Bodenplatte (4) ist im Bereich des geschlossenen Endes der Aufnahmemulde (3) schräg nach oben hin abgewinkelt,
-- die Seitenwände (5) weisen im Bereich des offenen Endes der Aufnahmemulde (3) in ihren unteren Abschnitten und im Bereich des geschlossenen Endes der Aufnahmemulde (3) in ihren oberen Abschnitten jeweils mehrere nebeneinanderliegende, nach unten bzw. oben offene Hinterschneidungen (6) auf,
-- gegenüber den Hinterschneidungen (6) sind in den Seitenwänden (5) nach oben bzw. unten offene, nebeneinanderliegende kreisförmige Vertiefungen (7) angeordnet,
- und wobei die Halterungen (2) folgendermaßen streifenförmig ausgebildet sind:
-- an einem Ende sind sie von einem rechtwinklig zur Längsachse verlaufenden ersten Steg (8) und am anderen Ende von einem schräg zur Längsachse verlaufenden zweiten Steg (9) begrenzt,
-- die beiden Stege (8, 9) weisen zur selben Seite der Halterungen (2),
-- auf der Innenseite des ersten Steges (8) sind nebeneinanderliegende Pocken (10) angeordnet,
-- von der Innenseite des zweiten Steges (9) erstrecken sich nebeneinanderliegende, parallel zur Längsachse verlaufende Rippen (11),
--- deren Enden (12) so ausgestaltet sind, daß sie formschlüssig mit den Hinterschneidungen (6) in den Seitenwänden (5) des Aufnahmekörpers (1) ineinandergreifen.

## Claims

1. Holder device for a cordless telephone, characterized by an approximately cuboid holder body (1) which is provided with a holding trough (3) and has a base plate (4) which is angled off transversely, the side walls (5) of which holder body have in the front and rear sections in each case joining elements (6, 7, 10, 11, 12) for holders (2), and characterized furthermore by two strip-shaped holders (2) which are configured such that in connection with the holder body (1) they terminate at their one end with the side wall (5) and project at their other end over the side wall (5) and can be joined to the holder body (1) in each case only at diagonally opposite locations and respectively in an inverted alignment.

2. Holder device according to Claim 1, comprising a cuboid holder body (1) and two holders (2),
- the cuboid holder body (1) being constructed as follows:
-- a holding trough (3) which extends in the longitudinal direction and is open at a narrow end thereof is arranged in the upper part,
-- the base plate (4) is angled off obliquely upwards in the region of the closed end of the holding trough (3),
-- in their lower sections in the region of the open end of the holding trough (3) and in their upper sections in the region of the closed end of the holding trough (3) the side walls (5) respectively have a plurality of juxtaposed undercuts (6) open downwards and upwards, respectively,
-- juxtaposed circular depressions (7), open upwards and downwards, respectively, are arranged in the side walls (5) opposite the undercuts (6),
- it further being the case that the holders (2) are constructed in a strip-shaped fashion in the following way:
-- they are bounded at one end by a first web (8), which extends at right angles to the longitudinal axis, and at the other end by a second web (9) extending obliquely relative to the longitudinal axis,
-- the two webs (8, 9) point towards the same side of the holders (2),
-- juxtaposed swellings (10) are arranged on the inner side of the first web (8),
-- juxtaposed ribs (11) running parallel to the longitudinal axis extend from the inner side of the second web (9),
--- the ends (12) of which ribs are configured such that they engage in a self-closed fashion with the undercuts (6) of the side walls (5) of the holder body (1).

## Revendications

1. Dispositif de réception de téléphone sans fil, caractérisé par une pièce (1) de réception à peu près parallélipipédique, qui est munie d'une cuvette (3) de réception, qui comporte une plaque (4) de fond coudée transversalement et dans laquelle les parois (5) latérales ont dans la partie avant et dans la partie arrière des éléments (6, 7, 10, 11, 12) de liaison destinés à des fixations (2), et caractérisé de plus par deux fixations (2) en forme de bande, qui sont agencées de façon, en liaison avec la pièce (1) de réception, à se terminer sur l'une de leurs faces, par la paroi (5) latérale et, sur leur autre face, à dépasser de la paroi (5) latérale et à ne pouvoir être reliées à la pièce (1) de réception qu'en des points opposés en diagonale, suivant une orientation inverse.

2. Dispositif de réception suivant la revendication 1, constitué d'une pièce (1) de réception parallélipipédique et de deux fixations (2),
- la pièce (1) de réception parallélipipédique étant agencée de la manière suivante:
-- il est ménagé dans la partie supérieure une cuvette (3) de réception ouverte sur un petit côté et s'étendant dans la direction longitudinale,
-- la plaque (4) de fond est coudée en biais vers le haut dans la région de l'extrémité fermée de la cuvette (3) de réception,
-- les parois (5) latérales comportent dans la région de l'extrémité ouverte de la cuvette (3) de réception située dans leurs parties inférieures et dans la région de l'extrémité fermée de la cuvette (3) de réception située dans leurs parties supérieures, plusieurs contre-dépouilles (6) se trouvant côte-à-côte, ouvertes vers le bas et vers le haut,
-- il est ménagé en face des contre-dépouilles (6), dans les parois (5) latérales, des renfoncements (7) circulaires, se trouvant côte-à-côte, ouverts vers le bas et vers le haut,
- et les fixations (2) étant agencées en forme de bande de la manière suivante:
-- elles sont délimitées à une extrémité par une première barrette (8) qui s'étend perpendiculairement à l'axe longitudinal, et, à l'autre extrémité, par une deuxième barrette (9) qui s'étend en biais par rapport à l'axe longitudinal,
-- les deux barrettes (8, 9) sont tournées du même côté des fixations,
-- il est ménagé sur la face intérieure de la première barrette (8) des tétons (10) se trouvant côte-à-côte,
-- il s'étend depuis la face intérieure de la deuxième barrette (9) des nervures (11) ménagées côte-à-côte, qui s'étendent parallèlement à l'axe longitudinal,
--- dont les extrémités sont conformées de manière à pénétrer avec complémentarité de forme dans les contre-dépouilles (6) ménagées dans les parois (5) latérales de la pièce (1) de réception.
